# EUROPÄISCHE PATENTSCHRIFT

(11) **EP 0 800 032 B1**
(45) Veröffentlichungstag und Bekanntmachung des Hinweises auf die Patenterteilung: **02.10.2002**
(21) Anmeldenummer: 97104681.8
(22) Anmeldetag: 19.03.1997
(51) Int. Cl.: F16N 23/00, F16K 7/02

(54) **Ventil für Zentralschmieranlage**
Valve for central lubrication systems
Soupape pour installations de lubrification centralisée

(30) Priorität: 03.04.1996 DE 29606169 U
(43) Veröffentlichungstag der Anmeldung: 08.10.1997
(73) Patentinhaber: BÜMACH ENGINEERING INTERNATIONAL B.V., 7811 HH Emmen (NL)
(72) Erfinder: Büter, Josef, 7826 TA Emmen (NL)
(74) Vertreter: Haussingen, Peter

(56) Entgegenhaltungen:
- GB-A- 1 050 839
- GB-A- 2 091 853
- US-A- 3 121 475
- US-A- 4 824 072

## Beschreibung

Die Erfindung betrifft ein Ventil für Zentralschmieranlagen, indem es vorzugsweise zur Reibstellenversorgung einsetzbar ist, die unterschiedliche Schmierstoffmengen benötigen.

Bekannt sind Zentralschmiereinrichtungen, die nach dem Prinzip der elektrischen Taktschmierung arbeiten, wobei die mit Fett oder Öl zu versorgende Reibstelle den Schmierstoff bei Annäherung der Reibstelle, signalisiert durch einen Näherungsschalter, zugeführt bekommt. Hierbei kann der Schmierstoff mit oder ohne Druckluft aufgesprüht werden. Über eine Pumpe wird der Schmierstoff hochgespannt und über einen Druckventilblock, in der Regel mit einer Filtereinrichtung ausgerüstet, auf einen Verteiler geführt, von dem aus der Schmierstoff dosiert über Zuführungsleitungen, in denen im Bereich der Schmierstoffe Düsen sitzen, auf die Reibstelle übertragen. Bekannt ist auch, daß in Zentralschmiereinrichtungen die Schmiermittel von einem Progressiv-hauptverteiler auf Nebenverteiler geleitet werden, so daß beliebig viele Schmierstellen erreichbar sind und innerhalb der einzelnen Abführungen zu den Reibstellen, jeweils zugeordnete Dosiermengen geregelt werden können. Ausgeführt werden auch Ölumlaufschmierungen, wo das Öl dosiert jeder Schmierstelle zugeführt wird, von derselben abtropft und in einen Sammelbehälter gelangt. Hierbei wird der Schmierstoff gefiltert und gekühlt und erneut über Pumpen in den Kreislauf zur Schmierversorgung der Reibestelle gebracht. Alle Zentralschmiereinrichtungen sind mit Pumpen ausgerüstet, die unterschiedlich in der Dosierung betrieben werden können. Üblich ist, daß die Pumpen über Leitungen an sogenannte Progressivverteiler angeschlossen werden, die den Schmierstoff in einem festgelegten Mengenverhältnis, abhängig von der Größe der Reibstelle und deren Belastung, aufteilen. Sie fungieren als Wegeventil für den Schmierstoff auf der Strecke von der Pumpe zur Reibstelle.
Der Nachteil dieser Systeme besteht darin, daß es aufwendiger Technik bedarf, um eine reibstellenbezogene Mengendosierung vornehmen zu können. In der praktischen Ausführung ist überdies bekannt, daß die absperrenden Rückschlagventile störanfällig arbeiten. Die Störung verursacht eine Tropfung zum nicht erwünschten Zeitpunkt.

In der Druckschrift US 3178056 wird ein einfaches Schmiersystem beschrieben, welches periodisch Schmiermittel dosiert. Dieses Dokument beschreibt unter anderen ein einfaches Ventil, bei welchem die Dosierung dadurch erfolgt, daß der um die Kugel lagernde elastische Schlauch gegen den Außendruck gebläht wird, wobei die Kugel in Richtung zum abführenden Schmiermittelkanal gelangt und denselben verschließt. Durch den Verschluß des Schmierkanals füllen sich die Schmiertaschen des Schlauches mit Schmiermittel. Diese Füllung ist abhängig von der Größe der Schmiertasche und dem Füllungsdruck der Schmierpumpe. Hierbei ist die Größe des Füllungsdrucks begrenzt durch die zulässige Schlauchspannung. Die Abschaltung der Schmiermittelpumpe, oder auch eine ventilgesteuerte Umschaltung der Schmiermittelzuführung, ermöglicht es durch die Eigenspannung des Schlauches, die Schmiertaschen zu entleeren. Die so gespeicherte Dosiermenge wird aus dem kontrahierenden Schlauch ausgedrückt. Die abdichtende Kugel wird zu diesem Zweck gegen die Förderrichtung bewegt, so dass die Reibstelle freigegeben wird. Der Nachteil dieser einfachen Lösung liegt darin, dass das Ventil nur mit schwach viskosen Schmiermitteln gut verwendbar ist, da die Schlauchspannung eines zur Ausbildung der Fülltaschen hinreichend elastischen Schlauches begrenzt ist und dass das Ventil auf Grund der Materialermüdung hinsichtlich der Mengendosierung störanfällig ist.

In der Druckschrift DE-GM 1925662 wird ein Prinzip beschrieben, bei dem ein "birnenförmiges" Teil mit Außenschlauch als Zuführdüse dient, welche fest mit einer Lochplatte verbunden ist. Der Außenschlauch wird bei dieser Lösung direkt von dem "birnenförmigen" Teil fixiert und öffnet sich bei hinreichender Druckdifferenz entsprechend. Erfindungsgemäß eignet sich dieses Ventil zur Druckluftfüllung für Füllräume, die ungünstige Materialien beinhalten. Der Nachteil dieser Lösung besteht darin, dass kein höherviskoses Schmiermittel dosiert werden kann, sowie die Lösung nicht für diese Aufgabe ausgelegt ist.

In der Druckschrift US 4730635 ist ein Ventil beschrieben, dass über einen zusätzlichen Anschluß mit einem Druckmittel, bsw. Druckluft, gesteuert werden kann. Dazu wird eine Kugel als Ventilkörper verwendet, die innerhalb einer speziellen deformierbaren Einlage liegt und im undeformierten Zustand mit der innenliegenden Kugel das Ventil abdichtet. Beim Anliegen des Steuerdrucks wird die Einlage deformiert, so dass sie im Querschnitt von der Kugelsymmetrie abweicht und zur Ellipse wird. Demzufolge kann die Kugel aus geometrischen Gründen nicht mehr dichten und das Ventil ist definiert geöffnet.
Nachteilig ist die komplizierte Fertigung der speziellen deformierbaren Einlage und die Notwendigkeit der zusätzlichen Hilfsenergie in Form von Druckluft, um das regelbare Ventil zu erzielen.

In der Druckschrift DD 283780 A5 wird ein einfaches Ventil beschrieben, das aus einem zusammenhängenden Ventilkörper mit Einlaßkanal und Auslaßkanal und einer elastischen Hülle, die diese umgibt, besteht. Die elastische Hülle ist an den Enden des Ventilkörpers dicht befestigt (z.B. mit einem Null-Ring). Durch den Druck der Flüssigkeit weitet sich die elastische Hülle über dem rotationssymmetrischen Ventilkörper zwischen den Kanälen derart auf, dass die Flüssigkeit in bestimmter Menge den Ausgangskanal erreicht. Nachteilig bei dieser Lösung ist die Möglichkeit des Festsetzens von Verunreinigungen zwischen der elastischen Hülle und dem Ventilkörper, auf dem sie aufliegt, wodurch sie nicht mehr dicht schließt. Dadurch ist kein störungsunanfälliger Betrieb gewährleistet. Des Weiteren eignet sich diese Lösung nicht zur Dosierung höher viskoser Schmiermittel.

Die Aufgabe der Erfindung ist es, ein Ventil für Zentralschmieranlagen zu entwickeln, das die Abströmmengen des Schmiermittels dosiert, störunanfällig ist und tropffrei arbeitet und in einer aggressiven Außenatmosphäre oder in aggressiven Medium einsetzbar ist, wobei der technische Aufwand zur Steuerung des Absperrventils gering und einfach in der Herstellung sein soll.

Erfindungsgemäß wird die Aufgabe durch die im Patentanspruch 1 angegebenen Merkmale gelöst. Vorteilhafte Weiterbildungen sind aus den Unteransprüchen ableitbar.

Die Vorteile der Erfindung bestehen darin, dass das Absperrventil gleichzeitig die Mengenregulierung vornimmt, störunanfällig und tropffrei arbeitet und einer aggressiven Umgebung ausgesetzt werden kann. Weiterhin ist das Absperrventil wartungslos, ohne technischen Aufwand steuerbar und einfach in der Herstellung.

Die Erfindung wird anhand von Ausführungsbeispielen beschrieben nach
- Figur 1, als ein an einer Pumpeneinheit angeschlossenes Ventil,
- Figur 2, als ein in eine Zuführungsleitung zur Schmierstoffversorgung einer Reibstelle eingebautes Ventil,
- Figur 3, als ein Ventil im drucklosen Zustand,
- Figur 4, als ein Ventil während der Schmierstofförderung,
- Figur 5, als ein unter Druck stehendes Ventil, das gegenüber aggressiver Umwelteinflüsse geschützt ist.

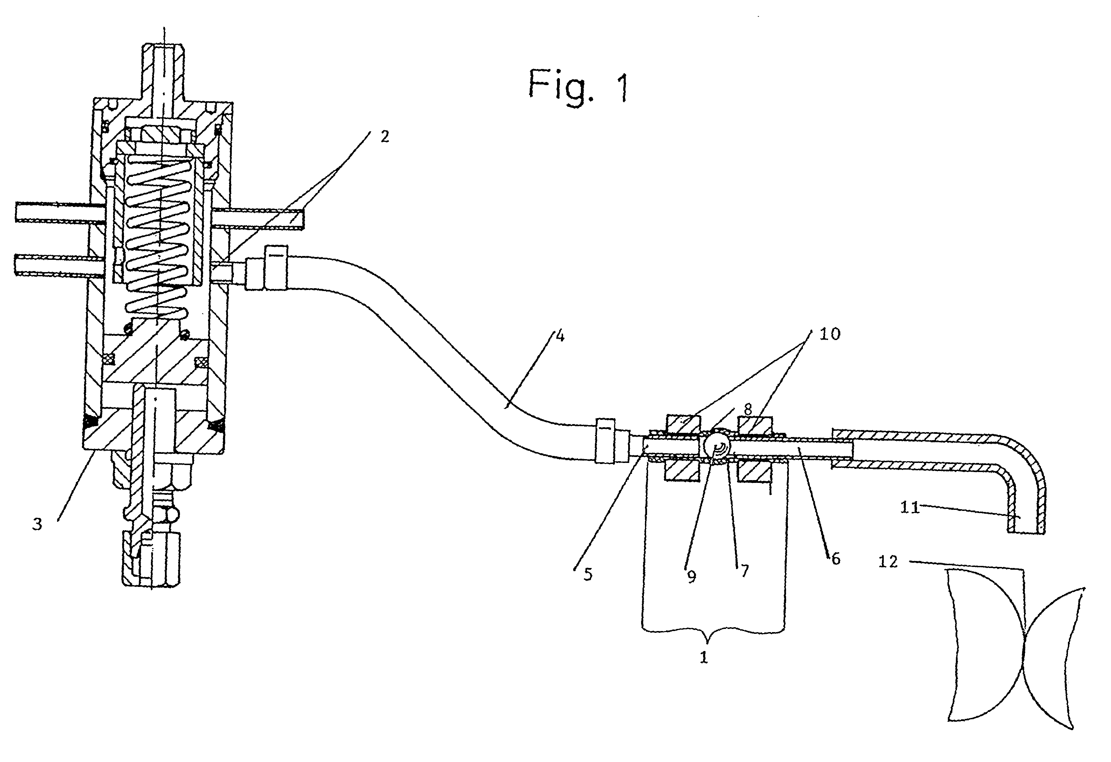

Nach Figur 1 ist das Ventil als ein Absperrventil 1 an einem der Pumpenausgänge 2 einer Pumpeneinheit 3 mittels einer Zuführleitung 4 angeschlossen, wobei ein Absperrventil 1 mit integrierter Dosierung des Schmiermittels aus einer Eingangsleitung 5, aus einer Abgangsleitung 6, aus einem äußeren Elastomerschlauch 7, aus einem inneren Elastomerschlauch 8, aus einem Absperrkörper 9 und aus Klemmverbindern 10 besteht, indem die Eingangsleitung 5 und die Abgangsleitung 6 dem inneren Elastomerschlauch 8 so zueinander angeordnet sind, dass der Absperrkörper 9 vom inneren Elastomerschlauch 8 aufgenommen wird und zwischen der Eingangsleitung 5 und der Abgangsleitung 6 angeordnet ist, jeweils ein Klemmverbinder 10 den äußeren Elastomerschlauch 7 so umschließt, dass die Eingangsleitung 5 und die Abgangsleitung 6 über den inneren Elastomerschlauch 8 abgedichtet ist und der Absperrkörper 9 in Wirkverbindung mit dem inneren Elastomerschlauch 8 und dem äußeren Elastomerschlauch 7 das Öffnen und Schließen des Absperrventils 1 absichert; der Abgangsleitung 6 ist eine Abführungsleitung 11 bis hin zur Reibstelle 12 zugeordnet.

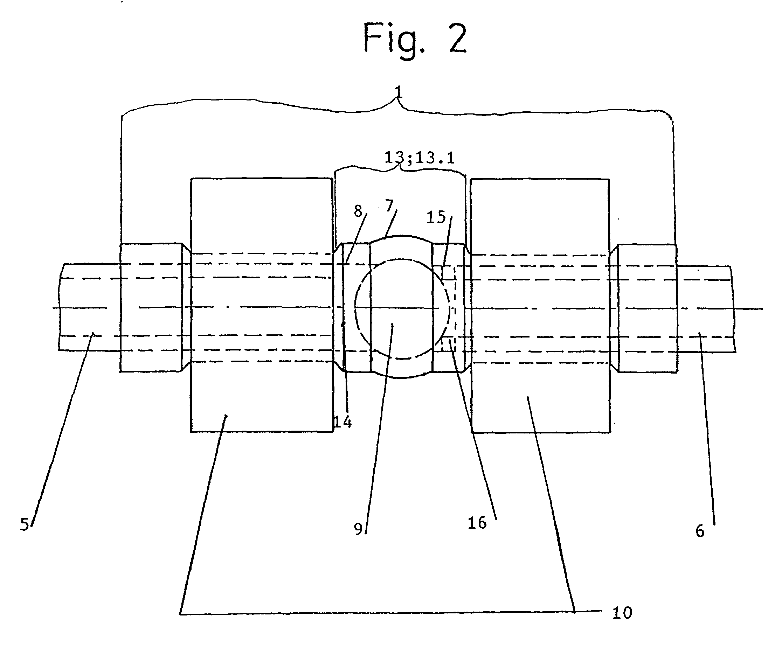

Nach Figur 2 ist der Einbau des Ventils in eine Zuführleitung zur Schmierstoffversorgung einer Reibstelle dargestellt, indem das Absperrventil 1 aus der Eingangsleitung 5, aus der Abgangsleitung 6, aus dem äußeren Elastomerschlauch 7, aus dem inneren Elastomerschlauch 8, aus dem Absperrkörper 9 und aus den Klemmverbinder 10 besteht, wobei der äußere Elastomerschlauch 7 und der innere Elastomerschlauch 8 zwischen den Klemmverbindern 10 eine Manschette 13 bildet, die in ihrem inneren Bereich eine Deformationszone 13.1 zur Verfügung stellt, die Eingangsleitung 5 an ihrem Ende zur Manschette 13 eine glatte Stirnfläche 14 aufweist, der Ausgangsleitung 6 an ihrem Ende zur Manschette 13 an ihrer Stirnfläche 15 eine Durchflußkerbe 16 zugeordnet ist.

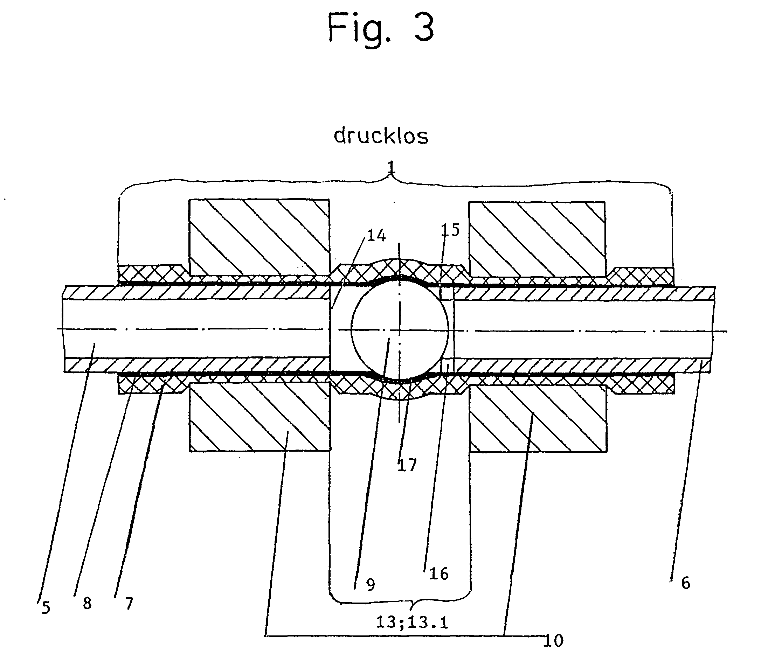

Die in Figur 3 dargestellte Lösung zeigt das Absperrventil 1 im drucklosen Zustand, das aus der Eingangsleitung 5, aus der Abgangsleitung 6, aus dem äußeren Elastomerschlauch 7, aus dem inneren Elastomerschlauch 8, aus dem Absperrkörper 9 und aus den Klemmverbindern 10 besteht, wobei der äußere Elastomerschlauch 7 und der innere Elastomerschlauch 8 zwischen den Klemmverbindern 10 eine Manschette 13 bildet, die in ihrem inneren Bereich eine Deformationszone 13.1 zur Verfügung stellt, die Eingangsleitung 5 an ihrem Ende zur Manschette 13 eine glatte Stirnfläche 14 aufweist, der Ausgangsleitung 6 an ihrem Ende zur Manschette 13 an ihrer Stirnfläche 15 eine Durchflußkerbe 16 zugeordnet ist, wobei sich der Bereich des inneren Elastomerschlauch 8, der dem Absperrkörper 9 gegenüber steht, geometrisch bedingt, an die kugelförmige Oberfläche des Absperrkörpers 9 als eine Ringfläche 17 abdichtend auflegt, indem der Absperrkörper 9 an der Stirnfläche 15 mit der Durchflußkerbe 16 anliegt, wobei der Absperrkörper 9 aus einer Kugel, aus einem Zylinder, aus einem Kegel etc., bestehen kann.

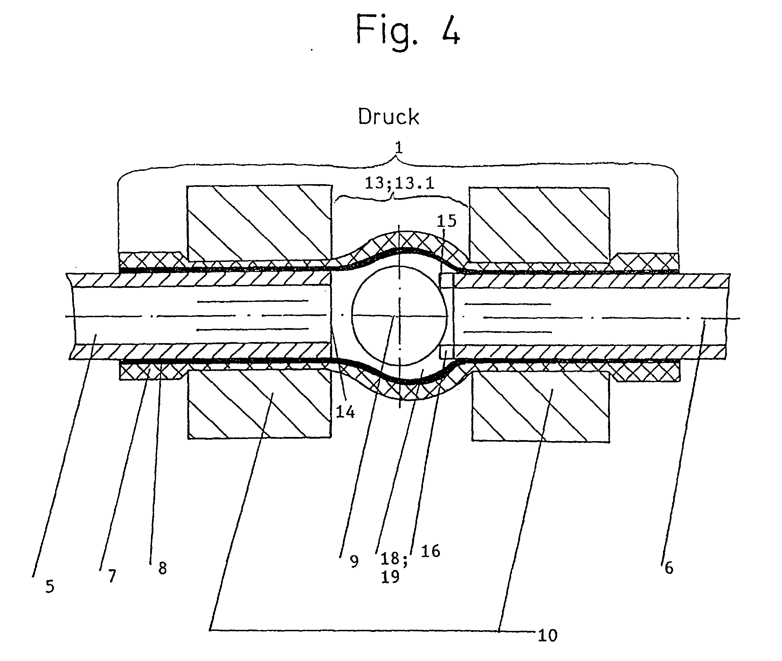

Die in Figur 4 dargestellte Lösung zeigt das Absperrventil 1 der erfinderischen Lösung während der Schmierstofförderung (Absperrventil steht unter Druck), das aus der Eingangsleitung 5, aus der Abgangsleitung 6, aus dem äußeren Elastomerschlauch 7, aus dem inneren Elastomerschlauch 8, aus dem Absperrkörper 9 und aus den Klemmverbindern 10 besteht, wobei der äußere Elastomerschlauch 7 und der innere Elastomerschlauch 8 zwischen den Klemmverbindern 10 eine Manschette 13 bildet, die in ihrem inneren Bereich eine Deformationszone 13.1 zur Verfügung stellt, die Eingangsleitung 5 an ihrem Ende zur Manschette 13 eine glatte Stirnfläche 14 aufweist, der Ausgangsleitung 6 an ihrem Ende zur Manschette 13 an ihrer Stirnfläche 15 eine Durchflußkerbe 16 zugeordnet ist, indem zwischen dem inneren Elastomerschlauch 8 und dem Absperrkörper 9 in Richtung Abgangsleitung 6, zunehmend sich vergrößernd, ein Ringspalt 18 ausgebildet ist, der einen Durchflußkanal 19 bildet, wobei der Absperrkörper 9 an die Stirnfläche 15, die mit der Durchflußkerbe 16 versehen ist, gepreßt wird.

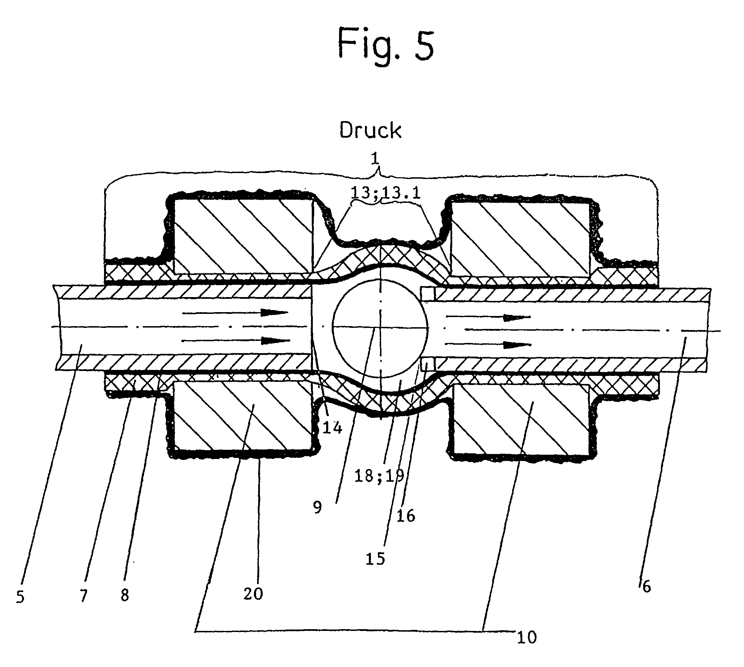

In Figur 5 ist das Absperrventil 1, das unter Druck steht und gegenüber aggressiver Umwelteinflüsse geschützt ist, dargestellt, das aus der Eingangsleitung 5, aus der Abgangsleitung 6, aus dem äußeren Elastomerschlauch 7, aus dem inneren Elastomerschlauch 8, aus dem Absperrkörper 9 und aus den Klemmverbindern 10 besteht, wobei der äußere Elastomerschlauch 7 und der innere Elastomerschlauch 8 zwischen den Klemmverbindern 10 eine Manschette 13 bildet, die in ihrem inneren Bereich eine Deformationszone 13.1 zur Verfügung stellt, die Eingangsleitung 5 an ihrem Ende zur Manschette 13 eine glatte Stirnfläche 14 aufweist, der Ausgangsleitung 6 an ihrem Ende zur Manschette 13 an ihrer Stirnfläche 15 eine Durchflußkerbe 16 zugeordnet ist, indem zwischen dem inneren Elastomerschlauch 8 und dem Absperrkörper 9 in Richtung Abgangsleitung 6, zunehmend sich vergrößernd, ein Ringspalt 18 ausgebildet ist, der einen Durchflußkanal 19 bildet, wobei der Absperrkörper 9 an die Stirnfläche 15, die mit der Durchflußkerbe 16 versehen ist, gepreßt wird, wobei die Oberfläche des äußeren Elastomerschlauches 7, die Oberfläche und die Seitenfläche der Klemmverbinder 10 sowie die Oberfläche der Manschette 13 mit einem resistenten aufgeschrumpften Schlauch 20 versehen ist.

Die Funktion der erfinderischen Lösung ist dadurch charakterisiert, dass in die Leitungen 4; 11 zu den Schmierstellen das Absperrventil 1 mit integrierter Mengenregelung eingebaut ist. Dieses Absperrventil 1 ist gekennzeichnet durch die Manschette 13, in der ein Absperrkörper 9 arbeitet, der die Innenkontur der Manschette 13 aufweist, welche sich mit einer definierten Vorspannung um den Absperrkörper 9 legt und den von der Pumpeneinheit 3 geförderten Schmierstoff an der Weiterleitung zur Reibstelle 12 hindert. Diese Vorspannung sorgt für einen dichtungssicheren Verschluß immer dann, wenn kein Schmierstoff gefördert wird. Der Einbau des Absperrventils 1 erfolgt in die jeweiligen Leitungen 4; 11 zur Reibstelle 12, wobei die dem Absperrventil 1 schmierstoffzuführende Eingangsleitung 5 eine glatte Stirnfläche 14 aufweist, während die Abgangsleitung 6 mit einer Durchflußkerbe 16 versehen ist, in der der Schmierstoff einströmt zum Zwecke der Weiterleitung. Diese Durchflußkerbe 16 ist notwendig, da sich der Absperrkörper 9, infolge des unter Druck stehenden Schmierfluides, in Richtung zur Stirnfläche der Abgangsleitung 6 bewegt und auf dieser eine Abstützung erlangt.
Die Größe der Spannung des Elastomerschlauches 7 ist ein Maß für den Öffnungsdruck und damit für die Weite des vorzugsweise ringförmigen Durchflußkanales 19. Bei einem vorgegebenen Arbeitsdruck der Pumpeneinheit 3 und dem elastischem Verhalten des Elastomerschlauches 7 regelt sich in Abhängigkeit von der Vorspannung des Elastomerschlauches 7 auf den koaxial zum Innendurchmesser desselben angeordneten Absperrkörpers 9, die Durchflußmenge des abströmenden Schmiermittels, wobei die Größe des Ringspalts 18 wesentlich von dem vor dem Absperrkörper 9 vorhandenen Staudruck, dem Durchmesser des Absperrkörpers 9 und der Konstanten des Elastomerschlauchs 7 abhängt.

Dieses einfache Prinzip ermöglicht, bei einem konstanten Pumpendruck die Mengenregelung in der jeweiligen Abführungsleitung 11 zur Reibstelle 12, durch Variation der Elastizität, z. B. des äußeren Elastomerschlauches 7, der Vorspannung, z. B. des äußeren Elastomerschlauches 7, auf der Ringfläche 17 des Absperrkörpers 9 und dem Durchmesser des Absperrkörpers 9.
Hierdurch ergeben sich unterschiedliche Querschnitte von Absperrkörper 9 und Innendurchmesser, z. B. des inneren Elastomerschlauches 8, deren Verhältnis sich in den Grenzen von 2,5 bis 1,4 bewegen sollte.
Zur Herstellung, z. B. des Elastomerschlauches 7, sind bevorzugterweise Schläuche der Werkstoffgruppe Butadien-Acrilnitril Kautschuk, Chloropren Kautschuke und Fluorethylenpropylen vorgesehen.
Diese Elastomere eignen sich insbesondere deshalb, weil im vorliegenden Falle mechanische Beanspruchungen vorliegen. Die Härte der einzusetzenden Materialien liegt im Bereich von 40 bis 70 Shore A; der statische E-Modul, in Abhängigkeit von der Härte des Werkstoffes bei 5 bis 40 N/mm².
Um den vielfältigen Anwendungsmöglichkeiten zu entsprechen, ist es auch möglich, Doppelmantelschläuche als äußerer Elastomerschlauch 7 und inneren Elastomerschlauch 8 einzusetzen, wobei die Eigenschaftswerte des Innenliners (inneren Elastomerschlauchs 8) andere sind als die des äußeren Elastomerschlauches 7. Hierbei verfolgt man das Ziel, die vielfältigen Einflußgrößen hinsichtlich der Belastung des Schlauches dadurch zu verbessern, dass man die Belastungseinflüße auf den jeweiligen Schlauch optimal abstimmt.
Der innere Elastomerschlauch 8 ist hierbei vorwiegend resistent gegenüber den zerstörenden Einflüssen mineralhaltiger Schmierstoffe und deren Quellungserscheinungen, während der äußere Elastomerschlauch 7, bei ausreichender Resistenz diesen Schmierstoffen gegenüber, stabil sein muß gegenüber Witterungserscheinungen und mechanischen Belastungen.
Die Schläuche 7; 8 werden über Klemmverbinder 10, die der Befestigung der Schläuche 7; 8 dienen, an den zur Schmierstoffversorgung notwendigen Anschlüssen der Aggregate angeschlossen. Im Falle einer aggressiven Außenatmosphäre werden diese Klemmverbinder 10 durch zusätzlich aufgeschrumpfte Schläuche 20 geschützt.

### Verwendete Bezugszeichen

- 1: Absperrventil
- 2: Pumpenausgang
- 3: Pumpeneinheit
- 4: Zuführleitung
- 5: Eingangsleitung
- 6: Abgangsleitung
- 7: äußerer Elastomerschlauch
- 8: innerer Elastomerschlauch
- 9: Absperrkörper
- 10: Klemmverbinder
- 11: Abführungsleitung
- 12: Reibstelle
- 13: Manschette
- 13.1: Deformationszone
- 14: glatte Stirnfläche
- 15: Stirnfläche
- 16: Durchflußkerbe
- 17: Ringfläche
- 18: Ringspalt
- 19: Durchflußkanal
- 20: aufgeschrumpfter Schlauch

## Patentansprüche

1. Ventil für Zentralschmieranlagen als Absperrventil (1) zwischen einer Zuführleitung (4) vom Pumpenausgang (2) einer Pumpeneinheit (3) und einer Abführungsleitung (11) zu einer Reibstelle (12), bestehend aus einer Eingangsleitung (5), einer Abgangsleitung (6), einem inneren Elastomerschlauch (8), einem axialsymmetrischen Absperrkörper (9) und Klemmverbindern (10), wobei durch die Anordnung der Eingangsleitung (5) und der Abgangsleitung (6) zum inneren Elastomerschlauch (8) der Absperrkörper (9) vom inneren Elastomerschlauch (8) zwischen der Eingangsleitung (5) und der Abgangsleitung (6) aufgenommen wird sowie die Eingangsleitung (5) und die Abgangsleitung (6) über den inneren Elastomerschlauch (8) mittels jeweils einem Klemmverbinder (10) abgedichtet ist, wobei die Druckdifferenz des Schmiermittelpumpendrucks zur Auflagespannung des inneren Elastomerschlauchs (8) auf den Absperrkörper (9) das Öffnen und Schließen des Absperrventil (1) bewirkt, indem der innere Elastomerschlauch (8) zwischen den Klemmverbindern (10) eine Manschette (13) bildet und eine der Druckdifferenz zugeordnete Menge Schmiermittel passieren läßt, **dadurch gekennzeichnet,**
**dass** das Ventil einen äußeren Elastomerschlauch (7) aufweist und so ausgebildet ist,
**dass**, nachdem der Schmiermittelpumpendruck, der nicht größer als die summarische zulässige Materialspannung des äußeren Elastomerschlauches (7) und des inneren Elastomerschlauches (8) ist, die summarische Auflagespannung des äußeren Elastomerschlauches (7) und des inneren Elastomerschlauches (8) auf den Absperrkörper (9) überwunden und einen Ringspalt (18) gebildet hat, über eine an der Stirnfläche (15) am Ende der Manschette (13) der Abgangsleitung (6) befindliche Durchflußkerbe (16), das Schmiermittel direkt in die zur Reibstelle (12) führende Abführungsleitung (11) förderbar ist,
**dass** bei einem Schmiermittelpumpendruck, welcher kleiner als der für das Öffnen des Ringspalts (18) benötigte ist,
das Absperrventil (1) geschlossen ist,
**dass** der innere Elastomerschlauch (8) für ein bestimmtes Schmiermittel geeignet ist, der äußere Elastomerschlauch (7) ermüdungsfrei die vorgegebenen Elastizitätskennwerte aufweist sowie der Absperrkörper (9) mit dem inneren Elastomerschlauch (8) und dem Schmiermittel eine tribologische Anordnung bildet.

2. Ventil für Zentralschmieranlagen nach Anspruch 1, **dadurch gekennzeichnet,**
**dass** der Absperrkörper (9) der Innenkontur des inneren Elastomerschlauches (8) entspricht und derart dimensioniert ist, daß der Innendurchmesser des inneren Elastomerschlauches (8) mit einer dichtungssicheren Schlauchspannung auf dem Absperrkörper (9) auflagert.

3. Ventil für Zentralschmieranlagen nach Anspruch 1, **dadurch gekennzeichnet,**
**dass** der Absperrkörper (9) im inneren Elastomerschlauch (8) frei beweglich ist, nachdem der Schmiermittelpumpendruck die Auflagespannung des äußeren Elastomerschlauches (7) und des innerern Elastomerschlauches (8) auf den Absperrkörper (9) überwindet,

4. Ventil für Zentralschmieranlagen nach Anspruch 1, **dadurch gekennzeichnet,**
**dass** bei gegebener Dimensionierung des Absperrventils (1) durch die Variation des Schmiermittelpumpendrucks der Pumpeinheit (3) die Größe des Ringspaltes (18) regelbar ist.

5. Ventil für Zentralschmieranlagen nach Anspruch 1, **dadurch gekennzeichnet,**
**dass** der äußere Elastomerschlauch (7) und der innere Elastomerschlauch (8) durch einen doppeltwandigen Kunststoffschlauchbereich ausgebildet ist.

6. Ventil für Zentralschmieranlagen nach Anspruch 1, **dadurch gekennzeichnet,**
**dass** Ventilelemente für ein bestimmtes Schmiermittel eingesetzt und/oder eine Kapselung um das gesamte Absperrventil (1) mit einem für dieses bestimmte Schmiermittel aufgeschrumpften Schlauch (20) erfolgt.

7. Ventil für Zentralschmieranlagen nach Anspruch 1, **dadurch gekennzeichnet,**
**dass** der innere Elastomerschlauch (8) eine Härte von 40-70 Shore A und einen statischen Elastizitätsmodul zwischen 5-40 MPa aufweist.

## Claims

1. Valve for central lubrication systems as a shut-off valve (1) between a supply line (4) from the pump outlet (2) of a pump unit (3) and an outlet line (11) to a friction point (12), consisting of an inlet line (5), an outlet line (6), an inner elastomeric hose (8), an axially-symmetrical shut-off body (9) and clamping connectors (10), wherein by virtue of the arrangement of the inlet line (5) and the outlet line (6) with respect to the inner elastomeric hose (8) the shut-off body (9) is received by the inner elastomeric hose (8) between the inlet line (5) and the outlet line (6), and the inlet line (5) and the outlet line (6) is [sic] sealed by the inner elastomeric hose (8) by means of a respective clamping connector (10), wherein the pressure difference of the lubricant pump prcssure with respect to the contact tension of the inner clastomeric hose (8) upon the shut-off body (9) opens and closes the shut-off valve (1), in that the inner elastomeric hose (8) forms a collar (13) between the clamping connectors (10) and allows passage of a quantity of lubricant corresponding to the pressure difference, **characterised in that**
the valve has an outer elastomeric hose (7) and is formed in a such a way
that once the lubricant pump pressure, which is not greater than the total permissible material tension of the outer elastomeric hose (7) and of the inner elastomeric hose (8), has overcome the total contact tension of the outer elastomeric hose (7) and of the inner elastomeric hose (8) upon the shut-off body (9) and has formed an annular gap (18), the lubricant can be channelled, via a through-flow chamfer (16) located on the end surface (15) at the end of the collar (13) of the outlet line (6), directly into the outlet line (11) leading to the friction point (12),
that in the case of a lubricant pump pressure which is lower than that required to open the annular gap (18), the shut-off valve (1) is closed,
that the inner elastomeric hose (8) is suited to a specific lubricant, the outer elastomeric hose (7) has preset characteristic elasticity values without being prone to fatigue and the shut-off body (9) forms a tribological arrangement with the inner elastomeric hose (8) and the lubricant.

2. Valve for central lubrication systems as claimed in claim 1, **characterised in that** the shut-off body (9) corresponds to the inner contour of the inner elastomeric hose (8) and is dimensioned in such a way that the inner diameter of the inner elastomeric hose (8) is in contact with the shut-off body (9) with a hose tension which forms a reliable seal.

3. Valve for central lubrication systems as claimed in claim 1, **characterised in that** the shut-off body (9) can move freely in the inner elastomeric hose (8) after the lubricant pump pressure overcomes the contact tension of the outer elastomeric hose (7) and of the inner elastomeric hose (8) upon the shut-off body (9).

4. Valve for central lubrication systems as claimed in claim 1, **characterised in that** for certain dimensioning of the shut-off valve (1) the size of the annular gap (18) can be adjusted by varying the lubricant pump pressure of the pump unit (3).

5. Valve for central lubrication systems as claimed in claim 1, **characterised in that** the outer elastomeric hose (7) and the inner elastomeric hose (8) is [sic] formed by a double-walled synthetic material hose region.

6. Valve for central lubrication systems as claimed in claim 1, **characterised in that** the valve elements [are] used for a specific lubricant and/or the whole shut-off valve (I) is enclosed with a hose (20) which is shrunk on for this specific lubricant.

7. Valve for central lubrication systems as claimed in claim 1, **characterised in that** the inner elastomeric hose (8) has a Shore A hardness of 40-70 and a static elasticity modulus between 5-40 MPa.

## Revendications

1. Soupape pour des installations de lubrification centralisée, branchée comme soupape d'arrêt (1), entre une sortie de pompe (2) d'une unité de pompage (3) au moyen d'une conduite d'amenée 4 et la zone de frottement (12) par une conduite d'évacuation (11),
comprenant une conduite d'entrée (5), une conduite de sortie (6), un tuyau flexible intérieur en élastomère (8), un corps à symétrie axiale (9) et des raccords de serrage (10)
la conduite d'entrée (5) et la conduite de sortie (6) sont disposés par rapport au tuyau flexible intérieur en élastomère (8) de telle façon que le corps d'arrêt (9) est logé dans le tuyau (8) entre la conduite d'entrée (5) et la conduite de sortie (6)
un raccord de serrage (10) assure l'étanchéité entre la conduite d'entrée (5) et la conduite de sortie (6) par le tuyau (8),
la différence de pression entre la pression de pompage du lubrifiant assurant la tension d'appui du tuyau intérieur (8) sur le corps d'arrêt (9) provoquant l'ouverture et la fermeture de la soupape d'arrêt (1), le tuyau intérieur (8) formant entre les raccords de serrage (10), un manchon (13) laissant passer une quantité de lubrifiant selon la différence de pression,
**caractérisée en ce que**
la soupape comporte un tuyau flexible extérieur en élastomère (7) et après que la pression de pompage du lubrifiant inférieure à la somme de la tension autorisée du matériau du tuyau extérieur (7) et du tuyau intérieur (8) ait dépassé la somme de la pression d'appui du tuyau extérieur (7) et du tuyau intérieur (8) sur le corps d'arrêt (9) et après que ne soit formé l'intervalle annulaire (18) par lequel une encoche de passage (16) au niveau de la surface (15) à l'extrémité du manchon (13) de la conduite de sortie (6) le lubrifiant est fourni directement à la conduite de sortie (11) aboutissant à la zone de frottement (12),
la soupape d'arrêt (1) est fermée pour une pression de pompage du lubrifiant inférieure à celle nécessaire à l'ouverture de la fente annulaire (18),
le tuyau intérieur (8) est destiné à un certain lubrifiant, le tuyau flexible extérieur (7) présente, sans fatigue, les valeurs caractéristiques d'élasticité prédéterminées, et le corps d'arrêt (9) avec le tuyau intérieur (8) et le lubrifiant forment une disposition.

2. Soupape pour installations de lubrification centralisée selon la revendication 1,
**caractérisée en ce que**
le corps d'arrêt (9) correspond au contour intérieur du tuyau flexible intérieur (8) et il est dimensionné de telle façon que le diamètre intérieur du tuyau intérieur (8) s'appuie sur le corps d'arrêt (9) avec une tension de tuyau assurant l'étanchéité.

3. Soupape pour installations de lubrification centralisée selon la revendication 1,
**caractérisée par le fait que**
le corps d'arrêt (9) se déplace librement à l'intérieur du tuyau intérieur (8) lorsque la pression de pompage du lubrifiant dépasse la tension d'appui du tuyau extérieur (7) et du tuyau flexible intérieur (8) sur le corps d'arrêt (9).

4. Soupape pour installations de lubrification centralisée selon la revendication 1,
**caractérisée en ce que**
pour un dimensionnement donné de la soupape d'arrêt (1) la grandeur du passage annulaire (18) est réglée par la variation de la pression de pompage du lubrifiant de l'unité de pompage (3).

5. Soupape pour installations de lubrification centralisée selon la revendication 1,
**caractérisée par le fait que**
le tuyau extérieur (7) et le tuyau intérieur (8) sont formés par un segment de tuyau en matière synthétique à paroi double.

6. Soupape pour installations de lubrification centralisée selon la revendication 1,
**caractérisée par**
des éléments de soupape sont utilisés pour certains milieux et/ou par un empaquetage autour de toute la soupape d'arrêt (1) avec un tuyau flexible (20) fretté pour ce lubrifiant.

7. Soupape pour installations de lubrification centralisée selon la revendication 1,
**caractérisée par le fait que**
le tuyau flexible intérieur en élastomère (8) présente une dureté Shore A de 40-70 et un module d'élasticité statique situé entre 5-40 MPa.
